(19) Europäisches Patentamt
European Patent Office
Office européen des brevets

(11) **EP 4 621 416 A1**

(12) **EUROPÄISCHE PATENTANMELDUNG**

(43) Veröffentlichungstag:
**24.09.2025 Patentblatt 2025/39**

(21) Anmeldenummer: **25163001.8**

(22) Anmeldetag: **11.03.2025**

(51) Internationale Patentklassifikation (IPC):
**G01Q 60/02** (2010.01)   **G01Q 60/12** (2010.01)
**G01Q 60/18** (2010.01)

(52) Gemeinsame Patentklassifikation (CPC):
**G01Q 60/02; G01Q 60/12; G01Q 60/18**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **21.03.2024 DE 102024108203**

(71) Anmelder: **Universität Regensburg, in Vertretung
des
Freistaats Bayern
93053 Regensburg (DE)**

(72) Erfinder:
• **Huber, Prof. Dr. Rupert
93161 Sinzing / Eilsbrunn (DE)**
• **Siday, Dr. Thomas
Oxford OX1 4LD (GB)**
• **Gerasimenko, Dr. Iaroslav
93047 Regensburg (DE)**
• **Schiegl, Felix
93138 Lappersdorf (DE)**
• **Hayes, Johannes Martin
93053 Regensburg (DE)**
• **Huber, Dr. Markus Andreas
93051 Regensburg (DE)**
• **Wilhelm, Dr. Jan
93059 Regensburg (DE)**

(74) Vertreter: **Müller-Boré & Partner
Patentanwälte PartG mbB
Friedenheimer Brücke 21
80639 München (DE)**

(54) **OPTISCHE NAHFELD-TUNNELEMISSIONS-MIKROSKOPIE**

(57) Die vorliegende Erfindung betrifft einen neuartigen Ansatz, um optische Mikroskopie selbst mit Sub-Nanometer-Ortsauflösung zu ermöglichen. Dabei eröffnet die rein optische Messung Lichtwellen-getriebener Tunnelströme zwischen einer Messspitze und einer Probe einen experimentellen Zugang zu physikalischen Eigenschaften der Probe auf Längenskalen weit unterhalb der Beugungsgrenze des verwendeten Lichts. Gleichzeitig bietet die Detektion optischer Signale die Möglichkeit, eine Zeitauflösung besser als eine einzelne Oszillationsperiode des elektromagnetischen Trägerfeldes zu erreichen. Dabei umfasst das Mikroskopieverfahren ein optisches Anregen eines zeitlich variierenden Tunnelstroms zwischen einer Messspitze und einer Oberfläche einer zu untersuchenden Probe und ein Detektieren einer durch den zeitlich variierenden Tunnelstrom emittierten elektromagnetischen Strahlung.

Fig. 1

EP 4 621 416 A1

**Beschreibung**

Die vorliegende Erfindung betrifft einen neuartigen Ansatz, um optische Mikroskopie selbst mit Sub-Nanometer-Ortsauflösung zu ermöglichen. Dabei eröffnet die rein optische Messung Lichtwellen-getriebener Tunnelströme zwischen einer Messspitze und einer Probe einen experimentellen Zugang zu physikalischen Eigenschaften der Probe auf Längenskalen weit unterhalb der Beugungsgrenze des verwendeten Lichts. Gleichzeitig bietet die Detektion optischer Signale die Möglichkeit, eine Zeitauflösung besser als eine einzelne Oszillationsperiode des elektromagnetischen Trägerfeldes zu erreichen.

Optische Mikroskopie extrahiert materialspezifische Eigenschaften durch Analyse des Lichts, das vom zu untersuchenden Objekt (im Folgenden Probe genannt) reflektiert, transmittiert, emittiert oder gestreut wird. Durch das Beugungslimit ist die räumliche Ausdehnung des Fokus elektromagnetischer Strahlung und damit die Ortsauflösung optischer Mikroskopie jedoch nicht beliebig scharf definiert, sondern in Abhängigkeit von der Wellenlänge des verwendeten Lichts auf die Größenordnung der halben Wellenlänge beschränkt. Da die räumliche Ausdehnung und/oder die Strukturgrößen vieler zu untersuchender Proben (z.B. Elektronen, Atome, Moleküle, Nanostrukturen etc.) oft unter diesem Beugungslimit liegen, wurden verschiedene Techniken entwickelt, um mittels optischer Nichtlinearitäten oder unter Verwendung evaneszenter Nahfelder Licht-Materie-Wechselwirkung stärker zu lokalisieren.

Zur Mikroskopie mit einer Ortsauflösung besser als das Beugungslimit von Licht werden herkömmlicherweise entweder optische Nichtlinearitäten genutzt, durch die Licht-Materie-Wechselwirkung räumlich scharf lokalisiert wird, oder evaneszente elektromagnetische Felder im Nahfeld von Spitzen, Aperturen, Antennen, o.ä.. Technische Umsetzungen dieser Konzepte lassen sich im Allgemeinen in folgende Klassen gebräuchlicher Verfahren einordnen:
Bei deterministischer Superauflösungsmikroskopie werden in die Probe Fluorochrome eingebracht, die eine nichtlineare Antwort auf externe optische Anregung aufweisen. Konkret wird die Probe mit zwei Laserbündeln bestrahlt: dem Anrege- und dem Ausschaltstrahlbündel. Das Anregelicht wird direkt auf die Probe fokussiert, während das Ausschaltstrahlbündel ein ringförmiges Profil im Fokus aufweist und somit die Fluoreszenzfarbstoffe in einem ringförmigen Bereich um den Fokus des Anregelichts sättigt und somit deaktiviert. Während der minimale Durchmesser des Anregelichts beugungsbegrenzt ist, kann der "ausgeschaltete" zentrale Bereich kleiner als der mit dem Anregelaser beleuchtete Bereich sein. Durch das Scannen der Probe und Analyse des vom "aktiven" Bereich emittierten Lichts können so Details unterhalb des Beugungslimits aufgelöst werden. Dieses sowie verwandte Verfahren der Superauflösungsmikroskopie erreichen derzeit keine atomare Ortsauflösung. Zudem ist ultraschnelle Zeitauflösung damit bislang nicht demonstriert worden und auch konzeptionell nicht einfach erreichbar.

Optische Rastersondenmikroskopie beschreibt eine Reihe an Techniken, bei denen Licht in das evaneszente Nahfeld einer mikroskopischen Struktur, wie z.B. einer scharfen metallischen Spitze oder Apertur, eingekoppelt wird. Durch systematisches Abrastern der Probe kann damit Ortsauflösung weit besser als die Wellenlänge von Licht erreicht werden. Im Allgemeinen unterscheidet man folgende gebräuchliche Techniken:
Die Technik der lichtwellengetriebenen Rastertunnelmikroskopie (engl.: lightwave scanning tunneling microscopy, kurz: LW-STM) nutzt das elektrische Trägerfeld des auf die Spitze eingekoppelten Lichts als elektrische Vorspannung zwischen Spitze und Probe. Ist der Spitze-Probe-Abstand ausreichend klein und die Probe elektrisch leitfähig, so kann diese Spannung einen räumlich scharf definierten Tunnelstrom treiben. Die zeitlich gemittelte elektrische Detektion des Tunnelstroms zwischen Spitze und Probe erlaubt Rückschlüsse auf die physikalischen Eigenschaften der Probe. Die Ortsauflösung dieser Technik ist durch den Überlapp der elektronischen Wellenfunktionen der beitragenden Orbitale von Spitze und Probe bestimmt, wobei Sub-Nanometer-Ortsauflösung möglich ist. Die erreichbare Zeitauflösung der Messung bei der Verwendung ultrakurzer Lichtimpulse wird durch die Kombination der zeitlichen Form des verwendeten Lichtimpulses sowie der lokalen Zustandsdichte der Probe bestimmt. Da die Bandbreite der elektrischen Detektion technisch begrenzt ist (Zeitauflösung bestenfalls ~1 ns), ist dabei nur ein Vergleich der Eigenschaften vor und nach dem Lichtimpuls möglich. Mithilfe von begründeten Annahmen (z.B. zeitlicher Verlauf des angelegten Lichtpulses, differenzielle Leitfähigkeit der Probe, Feldverstärkung der Spitze etc.) können indirekt Aussagen über die Subzyklen-Dynamik während des Lichtimpulses getroffen werden, eine direkte, zeitlich aufgelöste Messung der Vorgänge während des Lichtimpulses ist nicht möglich. Außerdem setzt die elektrische Detektion von Strömen eine ausreichende Leitfähigkeit der Probe voraus.

Rastertunnellumineszenzmikroskopie basiert auf inelastischen Tunnelprozessen zwischen Spitze und Probe. Dabei wird elektronisch eine Spannung zwischen der Spitze eines STM und der zu untersuchenden Probe angelegt, was zu Tunnelprozessen zwischen diesen führt. Bei inelastischer Streuung der tunnelnden Elektronen wird die materialspezifische Überschussenergie in Form von Photonen emittiert. Durch spektrale Analyse dieses emittierten Lichtes können Aussagen über die lokale Materialkomposition getroffen werden. Auch hier ist die Ortsauflösung durch den Überlapp der elektronischen Wellenfunktionen der beitragenden Orbitale von Spitze und Probe bestimmt, was das Potential für Sub-Nanometer-Auflösung bietet. Da die einzelnen Tunnelprozesse intrinsisch zeitlich inkohärent sind, kann allerdings keine Aussage über die Subzyklen-Dynamik dieser getroffen werden. Eine weitere Einschränkung besteht darin, dass die Probe ausreichend leitfähig sein muss, da die tunnelnden Ladungsträger sonst ein Gegenfeld zur extern angelegten Spannung aufbauen und der Tunnelprozess zum Stillstand kommt.

Bei Rasternahfeldmikroskopie (engl.: scanning nearfield optical microscopy, kurz: SNOM) erzeugt das elektrische Feld des auf eine scharfe metallische Spitze fokussierten Lichts eine zeitlich veränderliche, lokalisierte Polarisation der Ladungsträger im Apex der Spitze. Abhängig von der dielektrischen Funktion der Probe induziert das so erzeugte elektrische Dipolmoment der Spitze einen Spiegeldipol in der Probe. Die Wechselwirkung dieser Dipole modifiziert die Streuung des Lichts ins Fernfeld. Da die Stärke dieser Wechselwirkung nichtlinear vom Spitze-Probe-Abstand abhängt, kann durch mechanische, harmonische Oszillation der Spitze und nachfolgende Demodulation des gestreuten elektrischen Feldes bei höheren Harmonischen der Spitzenoszillationsfrequenz der Beitrag dieser lokalisierten Nahfeld-Interaktion vom restlichen gestreuten Licht isoliert werden. In Kombination mit gepulsten, ultraschnellen Lichtquellen und stroboskopischer Detektion dieser elektro¬magnetischen Strahlung durch elektro-optisches Abtasten (engl.: electro-optic sampling, kurz: EOS) lassen sich Veränderungen der physikalischen Eigenschaften eines Systems während des anliegenden elektrischen Feldes auf Subzyklen-Zeitskalen auflösen. Die räumliche Auflösung dieser Technik ist im Wesentlichen unabhängig von der Wellenlänge der verwendeten elektromagnetischen Strahlung und wird von der Dimension der beitragenden Dipole und damit vom Krümmungsradius am Apex der Spitze beschränkt (~ 10 nm).

Aufgabe der vorliegenden Erfindung ist es, eine verbesserte Mikroskopie bereitzustellen, mit der einerseits eine hohe Ortsauflösung erreicht wird und die andererseits mit einer sehr hohen Zeitauflösung kompatibel ist. Diese Aufgabe wird durch ein Mikroskopieverfahren und eine Mikroskopievorrichtung mit den in den unabhängigen Ansprüchen angegebenen Merkmalen gelöst. Bevorzugte Ausführungsformen sind Gegenstand der abhängigen Ansprüche.

Somit bietet die Erfindung in einem Aspekt ein Mikroskopieverfahren, welches ein optisches Anregen eines zeitlich variierenden (insbesondere oszillierenden) Tunnelstroms zwischen einer Messspitze und einer Oberfläche (Probenoberfläche) einer zu untersuchenden (insbesondere zu mikroskopierenden) Probe und ein Detektieren einer durch den zeitlich variierenden Tunnelstrom emittierten elektromagnetischen Strahlung umfasst.

In einem weiteren Aspekt bietet die Erfindung eine entsprechende Mikroskopievorrichtung. Sie umfasst zunächst einmal einen Probenhalter zur Aufnahme einer zu untersuchenden Probe. Außerdem umfasst die Mikroskopievorrichtung eine Messspitze zur Untersuchung an einer Oberfläche der zu vom Probenhalter gehaltenen, zu untersuchenden Probe. Des Weiteren umfasst die Mikroskopievorrichtung eine optische Anregungseinrichtung zum optischen Anregen eines zeitlich variierenden Tunnelstroms zwischen der Messspitze und der Oberfläche (Probenoberfläche) der zu untersuchenden (insbesondere zu mikroskopierenden) Probe; und eine Detektionseinrichtung zum Detektieren einer durch den zeitlich variierenden Tunnelstrom emittierten elektromagnetischen Strahlung.

Insbesondere wird als Messspitze hierbei eine metallische bzw. elektrisch leitfähige Spitze verwendet, die als Rasterspitze im Wesentlichen parallel zur Probenoberfläche relativ zu der zu untersuchenden Probe bewegbar ist, um die Probenoberfläche zweidimensional zu untersuchen. Das Mikroskopieverfahren umfasst dazu vorzugsweise ein laterales Verschieben der zu untersuchenden Probe relativ zur Messspitze zur ortsaufgelösten Untersuchung der Probe. In der Mikroskopievorrichtung sind dazu vorzugsweise die Messspitze und der Probenhalter zum zweidimensionalen Scannen einer Probenoberfläche sehr präzise steuerbar relativ zueinander bewegbar.

Das optische Anregen des zeitlich variierenden Tunnelstroms umfasst dabei vorzugsweise ein Anordnen der Messspitze in einem Messabstand zur Oberfläche der zu untersuchenden Probe und ein Einstrahlen elektromagnetischer Anregungsstrahlung auf die Messspitze zur Erzeugung einer zeitlich variierenden (insbesondere oszillierenden) Tunnelspannung zwischen der Messspitze und der Oberfläche der zu untersuchenden Probe. Systematisch lässt sich dafür insbesondere eine elektromagnetische Welle $E_{\text{light}}$ als Anregungsstrahlung auf die Messspitze lenken, welche insbesondere durch eine scharfe metallische Spitze gebildet wird, wo die Anregungsstrahlung (als optisches Trägerfeld) eine zeitlich veränderliche (insbesondere oszillierende) Spannung zwischen Spitze und Probe bewirkt. Insbesondere korreliert dabei die zeitlich veränderliche Tunnelspannung mit der elektromagnetischen Welle der Anregungsstrahlung.

Befinden sich die Messspitze und die Probenoberfläche in ausreichender Nähe zueinander (Messabstand), kann die zeitlich variierende Tunnelspannung den zeitlich variierenden Tunnelstrom $\vec{j}(t)$ treiben, dessen Form und Stärke von der instantanen lokalen Leitfähigkeit der zu untersuchenden Probe abhängt. Nach den Maxwell-Gleichungen führt dieser zeitlich variierende Tunnelstrom $\vec{j}(t)$ zur Emission elektromagnetischer Strahlung, die sich im Fernfeld detektieren lässt.

Um zu beschreiben, wie die vom Tunnelstrom bewirkte elektromagnetische Strahlung im Bereich des Tunnelkontakts (also dem Übergangsbereich zwischen der Messspitze und der Probenoberfläche) ausgekoppelt wird, kann ein analytisches Streumodell (Punkt-Dipol-Modell) verwendet werden, wie es bereits für SNOM etabliert ist. Die Nahfeldinteraktion lässt sich mit Hilfe eines zeitlich veränderlichen Dipols $p_{nf}$ im Apex der Messspitze beschreiben, der als Produkt des einfallenden elektrischen Feldes (elektromagnetische Anregungsstrahlung) $E_{light}$ und einer effektiven Polarisierbarkeit des Messspitze-Probe-Systems zustande kommt, und somit $E_{light}$ näherungsweise in Phase folgt. Befinden sich Messspitze und Probe nun im Tunnelkontakt, so kann ein Tunnelstrom $\vec{j}(t)$ fließen, der ebenfalls im Wesentlichen in Phase mit dem treibenden Feld $E_{light}$ der elektromagnetischen Anregungsstrahlung ist. Dieser Tunnelstrom führt zu einer Akkumulation von Ladungsträgern (Ladungsträgerdichte $\rho = \int j(t)dt$ ) und somit zu einem zusätzlichen Dipol $p_{lw}$, der um $\pi/2$ phasenversetzt zum Nahfelddipol $p_{nf}$ auftritt.

Analog zum konventionellen Nahfelddipolmoment führt der strominduzierte Dipol ebenfalls zur Abstrahlung einer elektromagnetischen Welle, die gegenüber dem konventionellen SNOM-Signal um $\pi/2$ phasenversetzt ist. Für das neuartige Mikroskopiekonzept wird im Folgenden auch die Bezeichnung "near-field optical tunnelling emission microscopy", kurz "NOTE" verwendet.

Der NOTE-Mechanismus lässt sich auch durch quantenmechanische Simulationen im Rahmen von Dichtefunktionaltheorie reproduzieren. Hierzu wird die Auswirkung eines zeitlich variierenden elektrischen Feldes auf die elektronische Wellenfunktion einer Ansammlung an Atomen bestimmt, die der experimentellen Geometrie von Messspitze und Probe nachempfunden ist. Der Vergleich des aus der Simulation extrahierten Dipolmoments außerhalb des Tunnelkontakts (~$p_{nf}$) mit dem Dipolmoment im Tunnelkontakt (~$p_{lw}$) bestätigt den $\pi/2$ Phasenversatz zwischen den Beiträgen.

Die Extraktion einer komplexen Leitfähigkeit aus der Messung von $E^{scat}$ kann dann beispielsweise so erfolgen: Mit Hilfe einer numerisch bestimmten Transferfunktion kann abhängig von der Geometrie der Messspitze vom detektierten, gestreuten Fernfeld $E^{scat}$ auf die zeitabhängigen Dipole im Apex der Messspitze geschlossen werden. Da $p_{nf}$ dem anliegenden elektrischen Feld im Wesentlichen in Phase folgt, lässt sich aus dessen Streusignal der zwischen Messspitze und Probe anliegende Spannungstransient rekonstruieren. Durch Differenzieren des dazu um $\pi/2$ phasenversetzten Signals $p_{lw}$ kann dann $j(t)$ extrahiert werden. Der Vergleich der instantanen elektrischen Spannung mit der daraus resultierenden Stromstärke erlaubt es, Aussagen über die lokale Leitfähigkeit des zu untersuchenden Materials zu treffen. Da diese Idee vollständig optisch funktioniert, ist sie intrinsisch kompatibel mit ultraschneller Detektion (z.B. EOS), sodass erstmals elektronische Quantenbewegungen auf atomaren Längenskalen mit gleichzeitiger Subzyklen-Zeitauflösung beobachtbar werden.

Im Gegensatz zu LW-STM ist hierbei keine Gleichstrom-Leitfähigkeit der Probe erforderlich, sodass das Verfahren auch auf halbleitenden und isolierenden Probensystemen funktioniert. Zudem ist das neue Verfahren nicht auf ultrakurze Lichtimpulse beschränkt, sondern im Prinzip auch auf den Betrieb mit Dauerstrichlasern anwendbar.

Im Vergleich zu herkömmlichen SNOM-Systemen führt die sehr starke Abstandsabhängigkeit des Tunnelstroms im NOTE-Mechanismus aber zu einer höheren Ortsauflösung und einer höheren Sensitivität bezüglich lokaler Änderungen der elektronischen Oberflächenstrukturen der zu untersuchenden Probe. Die höhere Ortsauslösung ergibt sich sowohl in Richtung senkrecht zur Oberfläche (in der der NOTE-Mechanismus viel sensitiver ist als herkömmliche SNOM-Systeme) also auch in lateraler Richtung (also im Wesentlichen parallel zu Probenoberfläche). Selbst die Anforderungen an die "Schärfe" der Messspitze, also den Krümmungsradius am Apex der Messspitze sind viel geringer als bei herkömmlichen SNOM-Systemen, da beim erfindungsgemäßen NOTE-Mechanismus das Messignal sehr stark durch den Tunnelstrom an Punkt des geringsten Abstands zwischen Messspitze und Probenoberfläche geprägt wird und der Überlapp elektronischer Wellenfunktionen zwischen Messspitze und Probenoberfläche seitlich dazu sehr stark abfällt. Damit tragen selbst (oder vor allem) bei weniger "scharfen" Messspitzen (also bei größeren Krümmungsradien am Apex der Messspitze) zu dem um $\pi/2$ phasenversetzten Signal $p_{lw}$ die vom Zentrum der Spitze lateral versetzten Bereiche der Probenoberfläche viel geringer bei als zu dem dem anliegenden elektrischen Feld im Wesentlichen in Phase folgenden Signal $p_{nf}$. Gerade durch diesen Phasenversatz ließe sich die vom Tunnelstrom bewirkte elektromagnetische Strahlung im Fernfeld auch wirksam beispielsweise von anderen Signalen analog zu herkömmlichen SNOM-Signalen unterscheiden und trennen. Insbesondere umfasst somit vorzugsweise auch das Detektieren der durch den zeitlich variierenden Tunnelstrom emittierten elektromagnetischen Strahlung eine Identifikation bzw. Filterung dieser Strahlung anhand der Phasenlage relativ zur elektromagnetischen Anregungsstrahlung.

Bei der elektromagnetischen Anregungsstrahlung handelt es sich insbesondere um kohärente elektromagnetische Strahlung mit einer bevorzugten Anregungsfrequenz im Bereich von zumindest etwa 0,1 THz bis etwa 750 THz. Da auch der dadurch angeregte Tunnelstrom mit dem Signal der Anregungsstrahlung korreliert, liegt somit die vom Tunnelstrom emittierte elektromagnetische Strahlung bei derselben Frequenz. Wie beschrieben lässt sich die vom Tunnelstrom emittierte elektromagnetische Strahlung insbesondere anhand ihrer Phasenlage relativ zur Anregungsstrahlung identifizieren und detektieren.

Die vorliegende Erfindung betrifft damit eine neuartige Mikroskopie, die die exzellente räumliche Auflösung von lichtwellengetriebener Rastertunnelmikroskopie mit einer optischen Detektion eines Tunnelstroms bzw. eines gestreuten elektrischen Feldes kombiniert und dabei einerseits Ortsauflösungen weiter unterhalb des Beugungslimits von Licht und bis in den Sub-Nanometerbereich erlaubt und anderseits inhärent mit einer Zeitauflösung bis in den Subzyklenbereich kompatibel ist.

Vorzugsweise wird die zeitlich variierende (insbesondere oszillierende) Tunnelspannung mit einer Amplitude (oder einem Maximum des Absolutwertes) im Bereich von zumindest etwa 1 mV, vorzugsweise zumindest etwa 10 mV und/oder in einem Bereich von nicht mehr als etwa 5 V, vorzugsweise nicht mehr als etwa 1 V erzeugt. Bei diesen Werten für die maximale Tunnelspannung wird ausreichend starkes Signal in der vom Tunnelstrom emittierten elektromagnetischen Strahlung erreicht, ohne die elektronischen Zustand an der Probenoberfläche zu stark zu verändern und zu verfälschen, was eine Charakterisierung der Probenoberfläche verfälschen würde aber auch eine Differenzierung relevanter Oberflächenzustände erschweren würde.

Vorzugsweise liegt der Messabstand in einem Bereich von nicht mehr als etwa 10 nm, vorzugsweise nicht mehr als etwa 5 nm, noch mehr bevorzugt nicht mehr als etwa 2 nm, weiter bevorzugt nicht mehr als etwa 1 nm. Gerade bei diesem Messabständen lässt sich der erzeugte Tunnelstrom im Rahmen des NOTE-Mechanismus am effizientesten nutzen für eine Mikroskopie der zu untersuchenden Probe. Vor allem für die Bereiche geringerer Messabstände steigt der Anteil des Tunnelstroms an der gestreuten bzw. emittierten elektromagnetischen Strahlung deutlich zu. Bei den angegebenen Werten für den Messabstand ist vorzugsweise der maximale Messabstand gemeint. Insbesondere wenn der Messabstand moduliert wird, z.B. durch eine im Wesentlichen periodische Modulationsbewegung, kann es bevorzugt sein, wenn während der Modulation dieser maximale Messabstand nicht überschritten wird.

Insbesondere umfasst das Mikroskopieverfahren in einer bevorzugten Ausführungsform ein Anregen der Messspitze zu einer (insbesondere periodischen) mechanischen Schwingung in zumindest einer Richtung im Wesentlichen senkrecht zur Oberfläche der zu untersuchenden Probe. Damit wird der Messabstand zwischen der Messspitze und der Oberfläche der zu mikroskopierenden Probe (insbesondere periodisch) moduliert. Dies kann insbesondere zu einer periodischen Modulation eines durch die Messspitze in der Probe induzierten Dipols und damit insbesondere auch zur Modulation der Tunnelspannung zwischen der Messspitze und der Oberfläche der zu mikroskopierenden Probe führen, was bereits zu einer Modulation des Tunnelstroms beiträgt. Einen wesentlichen Betrag für eine Modulation des Tunnelstroms und damit auch der durch den Tunnelstrom emittierten elektromagnetischen Strahlung liefert aber vor allem die starke Abhängigkeit des Tunnelstroms vom Überlapp der elektronischen Orbitale (also der Aufenthaltswahrscheinlichkeiten der Elektronen) zwischen der Messspitze und der Oberfläche der zu mikroskopierenden Probe, welche wiederum sehr stark vom Messabstand abhängt. Selbst bei gleicher Tunnelspannung hängt der effektive Tunnelstrom somit sehr stark vom Messabstand ab, weshalb selbst sehr kleine Modulationen des Messabstandes bereits vergleichsweise große Modulationen des Tunnelstroms und damit auch entsprechend große Modulationen der vom Tunnelstrom emittierten elektromagnetischen Strahlung bewirken.

Gerade in dieser Hinsicht ist das erfindungsgemäße Verfahren anderen, insbesondere optisch detektierten Verfahren der Nahfeldmikroskopie wesentlich überlegen. Wie bereits ausgeführt trägt diese Abstandsabhängigkeit des Tunnelstroms (aufgrund des quantenmechanischen Überlapps elektronischer Zustände) zu einem sehr hohen Auflösung des Höhenprofils und der lokalen (elektrischen) Materialeigenschaften (Polarisierbarkeit, elektronische Oberflächenzustände, usw.), insbesondere weit höher als einerseits die geometrische "Schärfe" der Messspitze (z.B. ihr Krümmungsradius) und andererseits die Wellenlänge des optischen Trägerfeldes (d.h. des eingestrahlten bzw. emittierten elektromagnetischen Feldes).

Vorzugsweise weist die (insbesondere periodische) mechanische Schwingung eine Amplitude im Bereich von nicht mehr als etwa 5 nm, vorzugsweise nicht mehr als etwa 2 nm, noch mehr bevorzugt nicht mehr als etwa 1 nm, am meisten bevorzugt nicht mehr als etwa 0,5 nm auf. Selbst bei Amplituden von nur 1 oder wenigen Å wird noch eine deutliche Modulation des Tunnelstroms über die optische Detektion der vom Tunnelstrom emittierten elektromagnetischen Strahlung messbar. Vorzugsweise ist die Amplitude der periodischen mechanischen Schwingung kleiner als der maximale Messabstand, sodass die Messspitze die Probenoberfläche nicht berührt. Mit anderen Worten wird das erfindungsgemäße Mikroskopieverfahren bzw. die Mikroskopievorrichtung in einem Nichtkontakt-Modus (non-contact mode) betrieben.

Um die Auslenkung der Messspitze besonders gut ermitteln bzw. kontrollieren zu können, umfasst das Mikroskopieverfahren vorzugsweise ein Detektieren der Auslenkung der Messspitze mittels eines piezo-elektrischen Sensors. Die entsprechende Mikroskopievorrichtung umfasst dazu vorzugsweise einen piezo-elektrischen Sensor zum Detektieren der Auslenkung der Messspitze. Gerade damit lässt sich selbst bei vergleichsweise kleinen Amplituden der konkrete Verlauf der mechanischen Auslenkung der Messspitze quantitativ noch sehr präzise ermitteln. Dies ist gerade in Verbindung mit der starken Abstandsabhängigkeit des Tunnelstroms sehr vorteilhaft, um bereits sehr kleine lokale Variationen der Oberflächeneigenschaften detektieren zu können. Außerdem unterstützt die präzise Sensorik den zuverlässigen Betrieb im Nichtkontakt-Modus.

In einer weiteren bevorzugten Ausführungsform ist die Messspitze an einem schwingungsfähigen Resonanzfinger derart angeordnet, dass für eine Auslenkung der Messspitze (im Wesentlichen senkrecht zur Oberfläche der zu mikroskopierenden Probe) eine Federkraft im Bereich von zumindest etwa 10 N/m, vorzugsweise zumindest etwa 100 N/m, noch mehr bevorzugt zumindest etwa 0,5 kN/m, am meisten bevorzugt zumindest etwa 1 kN/m bewirkt wird. Im Vergleich zu typischen Silizium-Cantilevern in herkömmlichen SNOM-Aufbauten wird im Rahmen der Erfindung somit ein relativ steifer Resonanzfinger (mit hoher Federkonstante) bevorzugt. Dies begünstigt die reproduzierbare und gut kontrollierbare Modulation des Messabstandes bei vergleichsweise geringen Amplituden der mechanischen Schwingung des Messspitze (relativ zur Probenoberfläche) und bei vergleichsweise geringen Messabständen.

Nachfolgend wird die Erfindung anhand bevorzugter Ausführungsformen mit Bezug auf die beigefügten Zeichnungen weiter beschrieben. Dabei zeigen:

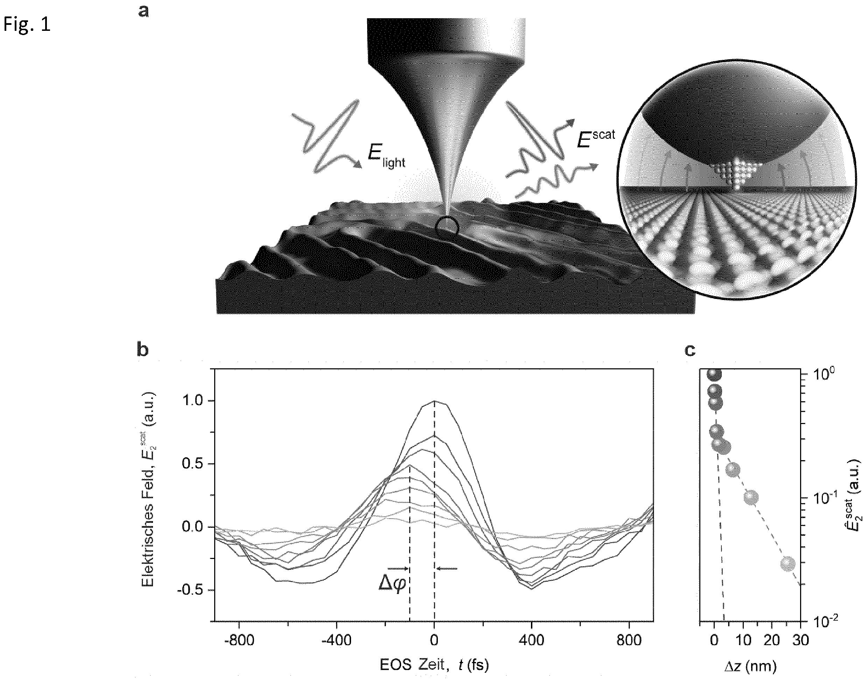

Fig. 1: Nahfeld bei atomarem Spitze-Probe-Abstand.

a ) Ein THz-Impuls ($E_{\text{light}}$) wird an eine scharfe Wolframspitze (als Beispiel der Messspitze) gekoppelt, die nahe an der Oberfläche von Au(111) (als Beispiel einer Probenoberfläche) positioniert ist. Dies führt zu einem nanoskaligen Dipol, der die Goldoberfläche polarisiert und das Licht in das Fernfeld streut ($E^{\text{scat}}$), wo es beispielsweise mit Hilfe von elektro-optischem Abtasten (EOS) erfasst wird. Durch Modulation der Höhe der STM-Spitze mit einem qPlus-AFM-Sensor und Messung bei harmonischen der Spitzenoszillationsfrequenz, kann $E^{\text{scat}}$ vom Fernfeldhintergrund isoliert werden. Wir konzentrieren uns auf die offene Schlüsselfrage, wie die atomare Geometrie des Apex der Spitze (Zoom-in) zu den von EOS detektierten Transienten beiträgt.
b) Elektrooptisch detektierte gestreute THz-Transienten, demoduliert bei der zweiten Harmonischen der Spitzenoszillationsfrequenz ( $E_2^{\text{scat}}$ ) mit einer Oszillations-Amplitude A = 25 nm. Von hellgrau nach dunkelgrau nimmt der durchschnittliche Abstand zwischen Spitze und Probe ab. Für den kürzesten Spitze-Probe-Abstand wird der Transient deutlich verändert, was sich in einer Phasenverschiebung $\Delta\varphi$ und einer dramatischen Zunahme der Spitzenamplitude äußert. Im Durchschnitt werden -900 Elektronen pro Lichtimpuls gleichgerichtet.

c) Feldspitze des THz-Transienten ( $\hat{E}_2^{\text{scat}}$ ) bei t = 0 fs, bei zunehmendem Abstand zwischen Spitze und Probe $\Delta z$. Die gestrichelten Linien zeigen zwei angepasste exponentielle Funktionen, einmal für das Abklingen des Nahfelds und einmal für den Beitrag zum gemessenen Signal, der in atomarer Nähe zur Probe entsteht. Der dramatische Anstieg von $\hat{E}_2^{\text{scat}}$ nahe $\Delta z$ = 0 nm (graue gestrichelte vertikale Linie) deutet auf Beiträge von atomaren Erhebungen am Apex der Spitze hin.

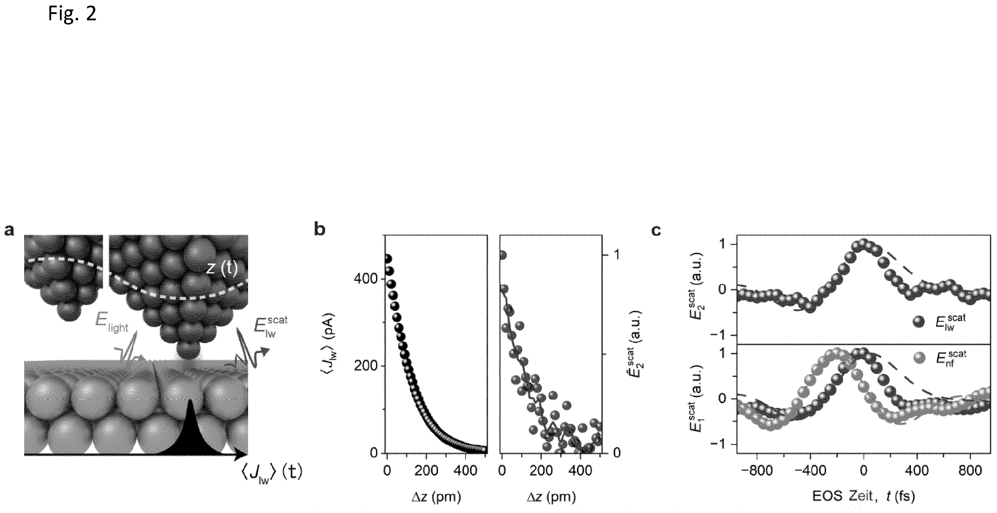

Fig. 2: Pikometrischer Zerfall der Lichtwellen-getriebenen Emission von Tunnelströmen.

a) Schema zur Veranschaulichung der Isolierung des atomaren Nahfeldsignals. Die Oszillationsamplitude der Spitze ist weitaus geringer als bei der konventionellen Nahfeldmikroskopie - in der Größenordnung einer einzelnen atomaren Periode (200 pm) - gewählt. Dies unterdrückt sowohl den konventionellen Nahfeldbeitrag als auch die Beiträge des Fernfelds. Wenn beim Punkt nähesten Abstands die vordersten Atome der Spitze in den Tunnelbereich hineinreichen, werden die lichtwellengetriebenen Tunnelströme über den Oszillationszyklus zeitlich moduliert $\langle J_{\text{lw}}\rangle(t)$ und emittieren kohärente Strahlung ( $E_{\text{lw}}^{\text{scat}}$ ).
b) Spitzenfeld der elektro-optisch detektierten gestreuten THz-Transienten $\hat{E}_2^{\text{scat}} = E_2^{\text{scat}}(t = 0 \text{ fs})$ , gemessen bei der zweiten Harmonischen der Spitzenoszillationsfrequenz (A = 200 pm), zusammen mit dem zeitintegrierten Lichtwellen-Tunnelstrom $\langle J_{\text{lw}}\rangle$ bei zunehmendem Abstand zwischen Spitze und Probe.
c) Elektrooptisch detektierte gestreute THz-Transienten, gemessen bei den ersten beiden Harmonischen der Spitzenoszillationsfrequenz (A = 200 pm). Die dunkle Kurve zeigt den Fall einer angenäherten Spitze ($\Delta z$ ~0 pm) in Fig. 2b wo im Durchschnitt ~180 Elektronen pro Puls gleichgerichtet werden. Die helle Kurve zeigt die gestreuten Nahfelder, die bei einer größeren Amplitude der Spitzenoszillationsfrequenz gemessen wurden (A = 2 nm). Die gestrichelten Linien entsprechen dem im Methoden-Abschnitt beschriebenen semiklassischen Dipolmodell.

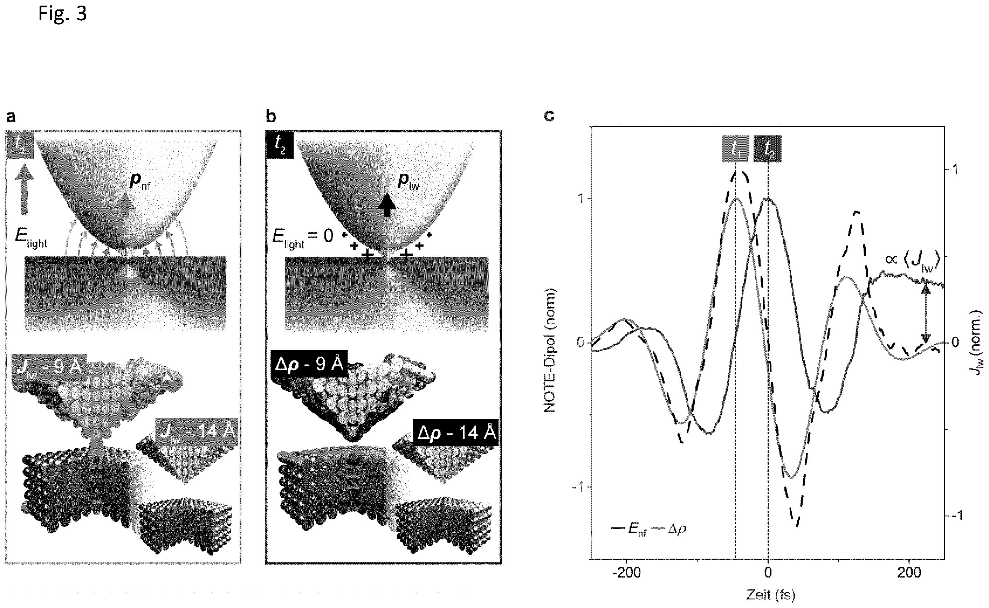

Fig. 3: Mikroskopisches Bild der THz-Emission durch Lichtwellen-getriebene Tunnelströme.

a) Bildung eines mesoskopischen Nahfelddipols $\boldsymbol{p}_{\text{nf}}$ am Apex der Spitze, getrieben durch das externe elektrische THz-Feld $E_{\text{light}}$ zur Zeit $t_1$ in Fig. 3c (oben). Im unteren Teil der Abbildung sind die vordersten Atome der Spitze dargestellt, durch die atomar begrenzte Tunnelströme $J_{\text{lw}}$ als Reaktion auf den Nahfelddipol fließen. Die Ergebnisse der zeitabhängigen Dichtefunktionaltheorie zur Berechnung der ultraschnellen Tunnelströme zu diesem Zeitpunkt werden durch die dunkelgrauen Isoflächen für die Spitze-Probe-Abstände von 9 Å (hier fließen Tunnelströme) und 14 Å (hier fließen praktisch keine Tunnelströme) visualisiert.

b) Zum Zeitpunkt $t_2$ gibt es keinen Nahfelddipol $p_{nf}$, da $E_{light}$ nahe Null ist (siehe oben). Die ab initio-Berechnungen (unten) zeigen jedoch, dass auch ohne externes Feld ein Dipol entsteht - dargestellt durch eine Isofläche der relativen Ladungsdichte $\Delta\rho$ - bei einem Abstand zwischen Spitze und Probe von 9 Å. Dieser Dipol wird durch Lichtwellen-getriebene Tunnelströme induziert und verschwindet vollständig, wenn der Spitze-Probe-Abstand auf 14 Å vergrößert wird.

c) Zeitliche Entwicklung der berechneten Nahfelder in Spitzennähe (helle Kurve) und $\Delta\rho$ (dunkle Kurve, proportional zu $p_{lw}$), die in den *ab initio*-Simulationen für einen Spitze-Probe-Abstand von 9 Å berechnet wurden. Die entsprechenden lichtwellengetriebenen Tunnelströme sind durch die gestrichelte Kurve dargestellt. Nichtlinearitäten bei der Bildung der Tunnelströme führen zur Akkumulation von Ladungen bei großen Verzögerungszeiten. Dieser Ladungsüberschuss ist proportional zum zeitintegrierten Lichtwellen-Tunnelstrom $\langle J_{lw}\rangle$.

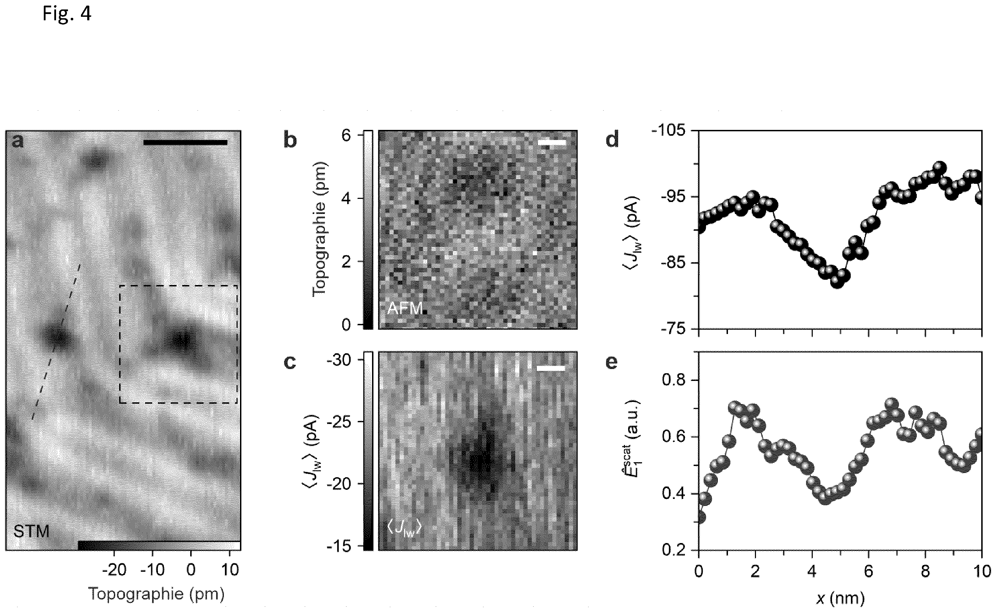

Fig. 4: Räumliche Auflösung der NOTE-Mikroskopie.

a) DC-STM-Bild der Au(111)-Oberfläche ($V$ = 450 mV, $I_{set}$ = 100 pA), das eine Fischgrätenrekonstruktion und Nanometer-große Gitterdefekte zeigt. Skalenbalken: 5 nm.

b) AFM-Topographie ($A$ = 250 pm, $\Delta v$ = -6 Hz) des Bereichs, der durch das gestrichelte Quadrat in Fig. 4a markiert ist. Die Vertiefung ist in der AFM-Topographie kaum sichtbar, was darauf hindeutet, dass der Ursprung des STM-Signals mit einer Modulation der lokalen DOS zusammenhängt.

c) Lichtwellen-STM-Bild, aufgenommen im quasi-konstanten Höhenmodus, das gleichzeitig mit Fig. 4b gemessen wurde und den Gitterdefekt deutlich zeigt. Skalenbalken: 1 nm.

d) Lichtwellen-STM-Linienscan über einen ähnlichen Defekt ($A$ = 250 pm, $\Delta v$ = -5.8 Hz) zeigt den zeitlich gemittelten Lichtwellenstrom $\langle J_{lw}\rangle$.

e) Das NOTE-Signal, das gleichzeitig mit Fig. 4d aufgenommen wurde. Gezeigt ist die erste Harmonische des detektierten elektrischen Feldes, gemessen an der Feldspitze des THz-Transienten. Zur Verdeutlichung wurden die Daten mit einem Savitzky-Golay-Filter mit einem 5-Punkte-Fenster geglättet. Der Linienschnitt in Fig. 4d,e wurde entlang der gestrichelten Linie in Fig. 4a aufgenommen.

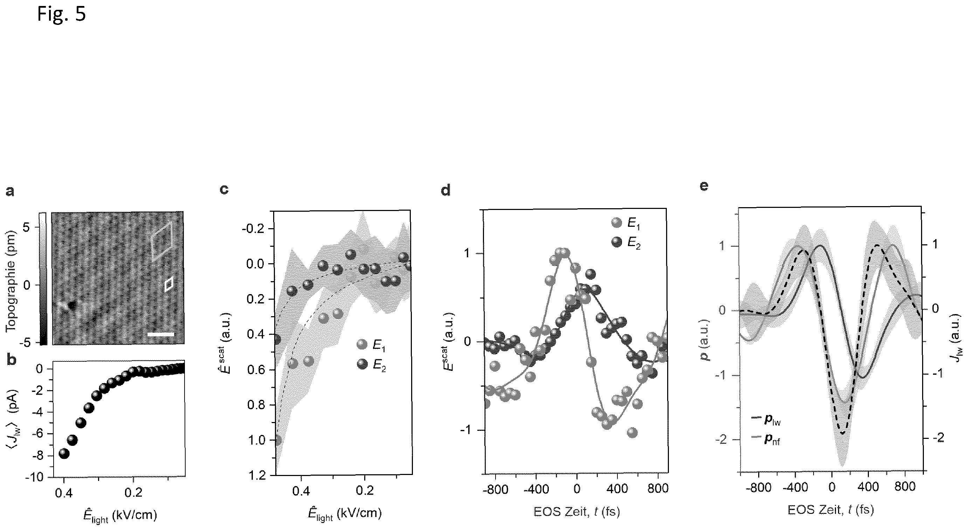

Fig. 5: Subzyklen-NOTE-Spektroskopie von $WSe_2$

a) DC-STM-Bild ($V$ = 1 V, $I_{set}$ = 100 pA) der Oberfläche einer Monolage $WSe_2$, die direkt auf eine Au(111)-Oberfläche exfoliert wurde. Die Einheitszellen des atomaren $WSe_2$-Untergitters und des Moiré-Übergitters sind weiss bzw. hellgrau hervorgehoben. Skalenbalken: 1 nm.

b) Zeitintegrierte THz-getriebene Tunnelströme $\langle J_{lw}\rangle$ auf einer $WSe_2$-Monolage als Funktion der THz-Spitzenfeldstärke ($\hat{E}_{light}$) zeigen den Beginn des Tunnelns an der Valenzbandkante des $WSe_2$.

c) Subzyklen-Detektion von Tunnelströmen für steigendes $\hat{E}_{light}$ gemessen an der Feldspitze des EOS-Transienten für die erste ($\hat{E}_1^{scat}$, hellgrau) und zweite ($\hat{E}_2^{scat}$, dunkelgrau) Oberschwingung der Spitzenoszillationsfrequenz ($A$ = 250 pm). Bei der höchsten gezeigten Feldstärke wurden im Durchschnitt ~20 Elektronen pro Impuls gleichgerichtet. Die DC-Leitfähigkeit ist als gestrichelte schwarze Linie eingeblendet, um das Bandkanten-ähnliche Einsetzen des NOTE-Signals hervorzuheben.

d) Gestreutes Nahfeld, gemessen auf einer Trilage $WSe_2$, wenn die Spitze vom Tunnelkontakt entfernt ist (hellgraue Kreise), und das NOTE-Signal, wenn die Elektronen tunneln können (dunkelgraue Kreise). Hier werden im Durchschnitt ~24 Elektronen pro Impuls gleichgerichtet.

e) Das Nahfeld an der Spitze (hellgrau Kurve), der NOTE-Dipol (dunkelgrau) und die ultraschnellen Tunnelströme, abgetastet in Echtzeit (dunkelgraue gestrichelte Linie). Alle Fehlerbalken in dieser Abbildung stellen eine Standardabweichung dar.

Optische Mikroskopie auf kürzesten Längen- und Zeitskalen gilt als lang ersehnter Rosetta-Stein, mit dem nanoskopische Elementarprozesse mit makroskopischen Funktionalitäten kondensierter Materie verbunden werden könnten. Superauflösungsmikroskopie umgeht das Beugungslimit im Fernfeld mit Hilfe optischer Nichtlinearitäten. Nahfeldmikroskopie erreicht selbst mittels optisch linearer Wechselwirkung mit evaneszenten Lichtfeldern an scharfen Spitzen noch höhere Auflösungen. Auf dieser Basis entstand ein dynamisches Forschungsfeld, das ultraschnelle Vorgänge im Nanokosmos erkundet. Dennoch verhindert der endliche Spitzenradius bislang atomare Auflösung. In der vorliegenden Arbeit nutzen wir starke atomare Nichtlinearitäten in spitzenbegrenzten evaneszenten Feldern, um rein optische Mikroskopie auf eine räumliche Auflösung im Pikometerbereich und eine zeitliche Auflösung im Femtosekundenbereich zu bringen. Auf diesen Skalen entdecken wir eine völlig neue, effiziente nicht-klassische Nahfeldantwort, die dem Vektorpotential des Lichts folgt und auf atomare Dimensionen beschränkt ist. Das ultraschnelle Signal zeichnet sich durch eine optische Phasenverzögerung von ~$\pi$/2 aus und ermöglicht die direkte Beobachtung elektronischer Tunneldynamik auf atomaren Skalen. Wir demonstrieren die Leistungsfähigkeit unseres neuen optischen Konzepts, indem wir nanoskalige Defekte abbilden, die selbst für Rasterkraftmikroskopie unsichtbar sind, und einen transienten elektronischen Tunnelstrom auf einem halbleitenden van-der-Waals-Material auflösen. Unsere Ergebnisse ermöglichen einen radikal neuen Zugang zur quantenmechanischen Licht-Materie-Wechselwirkung und zu elektronischer Dynamik auf ultimativ kurzen räumlichen und zeitlichen Skalen sowohl in leitfähigen als auch in isolierenden Quantenmaterialien.

Feldauflösende Metrologie elektromagnetischer Wellen hat eine Revolution in der Wissenschaft der Licht-Materie-Wechselwirkung eingeläutet. Mittels kalibrierter Nichtlinearitäten können elektro-optische Sensoren und Streaking-Detektion die zeitliche Entwicklung optischer Trägerwellen direkt abbilden und so die maximale klassische Information sowie Quantenfeldfluktuationen des Lichtfeldes auflösen. Sie haben damit die Grundlagen für Starkfeld- und Attosekundenforschung gelegt. Durch präzise zeitliche Vermessung von Lichtemission konnte mikroskopische Elektronen-dynamik mit einer Auflösung schneller als ein Lichtzyklus aufgeklärt werden, darunter der Aufbau von Abschirmung, Lichtwellen-getriebene Beschleunigung, Elektronentunneln und Vielteilchenkorrelationen. Dennoch konnten optische Subzyklen-Informationen aus einzelnen Atomen in molekularen oder kristallinen Medien bisher nicht extrahiert werden.

Nahfeldmikroskopie nutzt evaneszente Felder an winzigen metallischen Objekten, um Licht-Materie-Wechselwirkung auf Nanometer-Längenskalen zu erfassen, mehrere Größenordnungen unterhalb des Beugungslimits. Sie ermöglicht grundlegende Einblicke in Phasenübergänge, Quantenmaterialien, *in operando* Photochemie und ungewöhnliche Quasiteilchen - von Dirac-Plasmonen über hyperbolische und topologische Phonon-Polaritonen. Sie erwies sich auch als natürlicher Ansatz in der ultraschnellen Spektroskopie, indem sie die Femtosekunden-Zeitentwicklung der dielektrischen Funktion mit Nanometerauflösung abtastet. Dennoch wird die räumliche Auflösung von Nahfeldmikroskopen grundlegend durch die mesoskopische Größe der Sondenspitze (~10 nm) begrenzt.

Diese Auflösungsgrenze wurde vor Kurzem bei der optischen Abbildung einzelner Moleküle deutlich unterschritten. Dabei wurde inelastische Streuung und Lumineszenz genutzt, um eine laterale Auflösung im Sub-Nanometerbereich zu erreichen. Während solche Prozesse im Femtosekundenbereich bislang nicht direkt abgetastet werden konnten, bietet Lichtwellen-getriebene Rastertunnelmikroskopie (LW-STM) spannende Einblicke in dieses Regime, indem sie zeitintegrierte elektrische Ströme abbildet, die durch die Trägerwelle des Lichts gleichgerichtet werden. Die ultraschnelle Bewegung von Elektronen innerhalb eines einzigen Lichtzyklus konnte aber weiterhin nicht aufgelöst werden. Stattdessen stützt sich LW-STM auf weitreichende Annahmen über die Licht-Materie-Wechselwirkung innerhalb der Probe selbst, um transiente Ströme zu rekonstruieren (Methoden).

In der vorliegenden Arbeit führen wir ein grundlegend neues Paradigma der optischen Mikroskopie ein, das auf atomaren Nichtlinearitäten mesoskopischer Nahfelder beruht. Damit kann die optische Antwort einer Probe auf Subzyklen-Zeitskalen mit einer räumlichen Auflösung im Pikometerbereich beobachtet werden. Der Schlüssel zu unserem Ansatz liegt darin, zum ersten Mal die rein optische Detektion der Nahfeldmikroskopie mit Messungen im Ultrahochvakuum, bei kryogenen Temperaturen und mit Schwingungsamplituden der Rastersondenspitze im Sub-Nanometer-Bereich zu kombinieren. Wir beobachten eine unvorhergesehene nichtklassische Antwort, die auf einzelne atomare Orbitale lokalisiert ist. Diese neuartige Nahfeldantwort zeichnet sich im gestreuten elektromagnetischen Feld durch eine Phasenverschiebung von ~$\pi$/2 aus und resultiert von der ultraschnellen Bewegung tunnelnder Elektronen. Wir nutzen diese optische Nahfeld-Tunnelemission (englisch: near-field optical tunnelling emission, kurz: NOTE), um atomare räumliche Auflösung zu erreichen und um Subzyklen-Tunnelstromtransienten zu erfassen, die sogar innerhalb der Bandlücke eines Übergangsmetall-Dichalcogenid-Halbleiters fließen.

**Atomare optische Mikroskopie**

Der vorherrschende Ansatz zur Nahfeldmikroskopie beruht auf evaneszenten Feldern, die am Ende einer scharfen Metallspitze überhöht werden. Wird die Spitze in der Nähe einer Materialoberfläche positioniert, so polarisiert das elektrische Dipolmoment, dessen Ausdehnung durch den Spitzenradius (~10 nm) bestimmt wird, die Probe. Die entstehende Dipolstrahlung, welche Informationen über die lokale dielektrische Funktion enthält, wird ins Fernfeld gestreut und optisch detektiert. Um diese schwache Dipolstrahlung von Hintergrund-Streustrahlung zu isolieren, wird die Spitze in eine Oszillation mit einer Amplitude $A \approx 100$ nm versetzt und das Fernfeldsignal bei einer Harmonischen der Oszillationsfrequenz demoduliert. Während in der Rasterkraftmikroskopie (AFM) atomare Strukturen die kurzreichweitige Spitze-Probe-Wechselwirkung dominieren, ist ihre Rolle in Nahfeldexperimenten noch wenig erforscht. Dies gilt insbesondere für die Rolle von tunnelnden Elektronen. Um dies zu erforschen, kontrollieren wir den Abstand zwischen Spitze und Probe auf der Skala atomarer Wellenfunktionen, indem wir eine atomar scharfe Wolframspitze an einem steifen qPlus AFM-Sensor befestigen. Dies ermöglicht Pikometer-Oszillationsamplituden, drei Größenordnungen kleiner als in der Nahfeldmikroskopie üblich. Um starke Nichtlinearitäten zu treiben, fokussieren wir intensive Terahertz (THz)-Impulse auf die Spitze und detektieren das gestreute Feld mit Subzyklen-Auflösung mittels elektro-optischen Abtastens (englisch: electro-optic sampling, kurz: EOS) (Fig. 1a, Methoden).

Zunächst untersuchen wir, ob die vordersten Atome der Spitze die Streuung von Nahfeldern verändern können, wenn sie sich wenige Angström über einer Goldoberfläche befinden. Zu diesem Zweck messen wir das gestreute THz-Feld (Fig. 1b) bei einer großen Spitzenoszillationsamplitude ($A = 25$ nm), während die Spitze an die Oberfläche angenähert wird (Fig. 1c). Für Abstände $\gtrsim 1$ nm nimmt das maximale Feldsignal, demoduliert bei der zweiten Harmonischen der Oszillationsfrequenz ($\hat{E}_2^{scat}$), über einige zehn Nanometer ab, wie es für konventionelle Nahfelder zu erwarten ist. Interessanterweise ändert sich das Signal, wenn die Spitze der Probe extrem nahe kommt ($\lesssim 1$ nm): Die Träger-Einhüllendenphase ändert sich um $\Delta\varphi$ (Fig. 1b), während die Amplitude für alle Demodulationsordnungen, $E_i^{scat}$, sehr steil ansteigt (Fig. 1c). Diese Annäherungskurve kann mit zwei unabhängigen Exponentialfunktionen angepasst werden, welche die konventionelle Nahfeldwechselwirkung (Fig. 1c, hellgrau gestrichelte Linie) und einen viel schnelleren Zerfall in atomarer Nähe zur Probe (Fig. 1c, dunkelgrau gestrichelte Linie) beschreiben. Letzterer weist auf einen grundlegend neuen Beitrag zum gestreuten Felder hin.

Die große Schwingungsamplitude ($A = 25$ nm) mischt zwangsläufig mesoskopische und atomare Beiträge, indem sie über mehrere Größenordnungen im Spitzen-ProbenAbstand in einem einzelnen Oszillationszyklus reicht. Dennoch ändert sich die optische Phase klar, wenn sich die Nahfeldspitze der Probenoberfläche auf atomare Entfernung nähert. Daher reduzieren wir $A$ auf 200 pm, ungefähr einem Atomdurchmesser entsprechend (Fig. 2a). Unter diesen Bedingungen fließt ein Strom für den kürzesten Abstand zwischen Spitze und Probe, selbst wenn keine statische Vorspannung angelegt wird (Fig. 2b, links). Die Subnanometer-Zerfallskonstante deutet auf den mikroskopischen Ursprung hin: Elektronen, die durch die ultraschnelle bipolare Vorspannung des THz-Impulses angetrieben werden und durch die Tunnelbarriere zwischen Spitze und Probe hin und her wandern. Die aufgrund von Nichtlinearitäten in der lokalen Zustandsdichte (Englisch: density of states, kurz: DOS) gleichgerichteten Elektronen tragen zu einem zeitlich gemittelten Nettostrom $\langle J_{lw} \rangle$ bei, der, wenn er elektronisch gemessen wird, die Grundlage für LW-STM und die lichtwellenelektronische Steuerung von Nanobauelementen bildet.

Um zu untersuchen, ob unser phasenverschobenes optisches Signal mit LW-STM-Strömen korreliert, nehmen wir gleichzeitig deren Abklingverhalten bei $t = 0$ fs auf. Erstaunlicherweise beobachten wir in den gestreuten Feldern selbst bei pikometrischen Oszillationssamplituden ein starkes Signal, das in ~200 pm um eine Größenordnung abklingt - nahezu identisch mit $\langle J_{lw} \rangle$ (Fig. 2b, rechts). Um zu bestätigen, dass dieses Signal demselben Ursprung entspringt wie das in Fig. 1, messen wir auch hier die gestreuten THz-Transienten (Fig. 2c). Bei einem Spitze-Probe-Abstand von $\Delta z = 0$ pm (Fig. 2b) treten in allen Harmonischen des gestreuten Signals starke Wellenformen auf, die ihr Maximum bei $t = 0$ fs aufweisen (dunkelgraue Kugeln). Diese Wellenformen sind wiederum durch eine charakteristische Phasenverschiebung $\Delta\varphi \approx \pi/2$ gegenüber Transienten, die außerhalb des Tunnelkontakts gemessen werden (hellgraue Kugeln), verzögert.

Der Zerfall des gestreuten Signals auf Pikometer-Längenskalen sowie die charakteristische $\Delta\varphi \approx \pi/2$ Phasenverzögerung der in diesem Bereich gemessenen Transienten zeigen den mikroskopischen Ursprung der atomaren Nahfelder: eine optische Polarisation, getrieben von oszillierenden Tunnelströmen, die als Reaktion auf das instantane elektrische THz-Feld fließen. Dieses Ergebnis ist nicht intuitiv, da die allein durch diesen elektronischen Tunnelprozess entstehende Lichtemission praktisch nicht messbar und wesentlich schwächer als die hypothetische Emission eines Elektrons auf einer klassischen Trajektorie um den Kern eines Wasserstoffatoms ist. Durch effiziente Kopplung der evaneszenten Felder der Spitze ins Fernfeld dominiert die Tunnelemission bei atomaren Oszillationsamplituden jedoch sogar über konventionelle Nahfelder.

Die wichtigsten NOTE-Merkmale können qualitativ mit einem semiklassischen Dipolmodell (Methoden) verstanden werden, bei dem die Nahfeldantwort als Punktdipol $p_{nf}$ (Fig. 3a, oben) über einem unendlichen Halbraum behandelt wird. Dieser wird transient durch das externe Lichtfeld angetrieben. Der resultierende ultraschnelle Tunnelstrom $J_{lw}$ sorgt für einen lokalen Dipol $p_{lw}$, der mit einer Phasenverzögerung von $\pi/2$ relativ zu $p_{nf}$ schwingt (Fig. 3b, oben). Durch die Einbeziehung der spektralen Antwortfunktion von Spitze und Detektor erreicht dieses Modell bereits gute qualitative Übereinstimmung mit den gemessenen Transienten (Fig. 2c). Allerdings geht das Modell letztlich davon aus, dass getunnelte Elektronen den nanoskaligen Dipol $p_{lw}$ bilden und dass der ultraschnelle Elektronenfluss in NOTE der gleichen I-U Kennlinie wie das DC-Tunneln folgt, eine bekanntermaßen ziemlich grobe Näherung.

Um zu verstehen, wie $p_{lw}$ entsteht, ohne Annahmen über den Tunnelprozess machen zu müssen, führen wir *ab initio* Quantensimulationen der Ladungsdichte in einer mesoskopischen Spitze-Probe-Struktur aus 1010 Na-Atomen durch, die mit einem Lichtwellenimpuls angeregt wurde (Methoden). Das Tunneln von Elektronen ist dabei intrinsisch durch den Überlapp von Atomorbitalen berücksichtigt. Die Quantensimulationen reproduzieren die charakteristische Phasenverzögerung $\Delta\varphi \approx \pi/2$ (Fig. 3c, dunkelgraue und hellgraue Kurven). Bei einem Abstand zwischen Spitze und Probe von 9 Å, bei dem Lichtwellen-getriebene Ströme fließen, bietet die Simulation direkten Zugang zur räumlichen Verteilung sowohl der Tunnelströme (Abb. 3a, unten) als auch des NOTE-Dipols (Fig. 3b, unten). Die Verteilung des Tunnelstroms ist aufgrund der Polarisation einzelner Atomorbitale extrem inhomogen, was sowohl bei $J_{lw}$ als auch $p_{lw}$ zu einem nahezu vollständigen Zerfall bei einem Spitze-Probe-Abstand von 14 Å führt (Fig. 3a,b unten). Dies stützt die Annahme, dass NOTE atomare Auflösung erreichen kann. Die Simulationen enthüllen auch den Ursprung des zeitintegrierten Stroms $\langle J_{lw} \rangle$, der in LW-STM gemessen wird: Er ist proportional zur Reststärke von $p_{lw}$ bei großen elektro-optischen Verzögerungszeiten (Fig. 3c). Dies illustriert deutlich, wie viel reichhaltiger die durch NOTE-Mikroskopie extrahierten Informationen im Vergleich zu LW-STM sind.

Hinweise auf eine nicht-triviale Quantendynamik zeigen sich darin, dass die experimentellen Kurven schmaler werden (Fig. 2c), was vom semiklassischen Modell nicht beschrieben wird: Für 50 fs < $t$ < 200 fs weicht der NOTE Dipol von der exakten Phasenverschiebung um $\pi/2$ ab. Wahrscheinlich polarisiert die Abschirmung durch die übertragenen Elektronen das umgebende Medium, was sich auf die Tunnelbarriere für die nachfolgenden Elektronen auswirkt. Die geringe Größe von $p_{lw}$, die von den Quantensimulationen vorhergesagt wurde, erklärt, warum NOTE völlig unvorhersehbar war. Nur durch Pikometer-stabile experimentelle Modulation der gestreuten Felder kann das NOTE-Signal auf atomarer Ebene von viel größeren mesoskopischen Abschirmströmen getrennt werden. Doch selbst unsere hochmodernen Quantensimulationen geben nicht das ganze Bild wieder. Die Größenordnungen, die erforderlich sind, um NOTE - einen inhärent Nicht-Gleichgewichts- und nicht-perturbativen Prozess - quantitativ zu modellieren stellen selbst für die modernste Quantentheorie eine große Herausforderung dar. Während unsere Quantensimulationen den wichtigsten NOTE-Mechanismus erfassen, würde eine quantitative Beschreibung der zeitabhängigen Vielteilchenwechselwirkungen, einschließlich Abschirmung, Streuung und Emission von Phononen und Plasmonen, weitere theoretische Entwicklungen erfordern.

### Laterale Auflösung im Angström-Bereich

Um zu prüfen, ob eine laterale Begrenzung des NOTE-Signals auf atomarer Ebene experimentell erreichbar ist, konzentrieren wir uns auf topografisch flache Oberflächenregionen, bei denen Kontrast ausschließlich aus räumlichen Variationen der Tunnelwahrscheinlichkeit resultieren sollte, wenn die Ströme atomar lokalisiert sind. Figuren 4a und b zeigen konventionelle Multimoden-Bilder (Methoden) der kleinsten uns zur Verfügung stehenden Strukturen ohne topografische Artefakte - Nanometer-große Gitterdefekte in der Fischgrätenrekonstruktion einer Au(111)-Oberfläche. Interessanterweise messen wir im Modus einer quasi-konstanten Spitzenhöhe (Methoden) eine lokale Reduktion von

$\langle J_{lw} \rangle$ atomar präzise in der Nähe des Defekts (Fig. 4c).
Um zu untersuchen, ob solche Defekte im NOTE-Signal aufgelöst werden können, messen wir einen Linienscan über einen vergleichbaren Defekt (Fig. 4d,e, Position in Fig. 4a): Dabei erfassen wir gleichzeitig $\langle J_{lw} \rangle$ und das instante NOTE-Signal an der Spitze des gestreuten Transienten (t = 0 fs). Beide Signale zeichnen den gesamten Defekt nach und zeigen, wie die Auflösung von NOTE und LW-STM aus dem orbitalen Überlapp zwischen dem vordersten Atom der Spitze und der Probe resultiert. Obwohl die laterale Ausdehnung des Tunnelbereichs in den Defekt bestimmt sowohl die räumliche Ausdehnung der NOTE- als auch der STM-Signale. Dies bedeutet aber nicht, dass die Ausdehnung der Signatur an der Auflösungsgrenze liege. Vielmehr zeigt die Kongruenz der räumlichen Signaturen, dass die Ortsauflösung von NOTE derjenigen von STM folgt, bei der sogar Sub-Angström-Strukturen aufgelöst werden können. Im Gegensatz zu STM-basierten Techniken erfordert NOTE keine elektrischen Strommessungen und ist daher wie AFM und SNOM nicht von Natur aus auf elektrisch leitende Proben beschränkt. NOTE ermöglicht damit gleichzeitig atomare und Subzyklen-Auflösung, ohne dass eine DC-Leitfähigkeit erforderlich ist.

### Subzyklen-Quantenfluss der Elektronen

Fig. 5 vermittelt einen Eindruck davon, wie die tunnelinduzierte THz-Emission Zeitdomänen-Informationen über den elektronischen Nicht-Gleichgewichtstransport in halbleitenden Quantenmaterialien liefert. Wir untersuchen eine Monolage $WSe_2$, die auf Au(111) exfoliert wurde (Methoden). DC-STM (Fig. 5a) löst das Moiré-Übergitter auf, das sich zwischen Gold und $WSe_2$ neben der erwarteten halbleiterähnlichen differentiellen Leitfähigkeit gebildet hat. Wir verändern die THz-Feldstärke und messen das NOTE-Signal an der Spitze der Transienten (t = 0 fs, Fig. 5c). Hier zeigt sich eine weitere optische Nichtlinearität, die gut mit der DC-Leitfähigkeit der Monolage übereinstimmt (Fig. 5c, gestrichelte Linien). Diese ausgezeichnete Übereinstimmung ist charakteristisch für die Subzyklen-Auflösung, die NOTE auszeichnet - das Signal bei t = 0 fs misst im Wesentlichen den instantanen Tunnelstrom an der Spitze des einfallenden Feldes $J_{lw}(t \approx -250$ fs) aufgrund der $\pi/2$ Phasenverschiebung. Während NOTE einen modellunabhängigen Zugang zur Subzyklen-Tunnelspektroskopie bietet, gilt dies nicht für den zeitlich gemittelten Strom $\langle J_{lw} \rangle$ (Fig. 5b). Obwohl auch $\langle J_{lw} \rangle$ den Beginn der Nichtlinearität zeigt, stammt dieser Strom nur von Elektronen, die durch unsere spezifische Kombination von Wellenform und Leitfähigkeit gleichgerichtet werden. Dadurch geht die Subzyklen-Dynamik verloren.
Während in einfachen Monolagen vergleichbare DC- und ultraschnellen I-U-Kennlinien beobachtet werden, ist es bei den meisten Materialien unwahrscheinlich, dass der ultraschnelle Fluss von tunnelnden Elektronen mit DC-Messungen übereinstimmt. Um dies zu demonstrieren, wechseln wir zu einer stärker isolierenden Probe: einer nativen WSe$_2$ Trilage, die auf Au(111) exfoliert wurde. Die zusätzlichen WSe$_2$-Schichten eröffnen ultraschnelle Tunnelwege, die zeitintegrierte Messungen nicht erfassen. Fig. 5d zeigt das NOTE-Signal (dunkelgrau) und die Nahfelder (hellgrau) auf der Trilage. Durch Invertierung der Spitzentransferfunktion (Methoden) können wir die Nahfeld- und NOTE-Dipole als Funktion der Zeit rekonstruieren (Fig. 5e). Wenn wir den NOTE-Dipol zeitlich ableiten, können wir die Subzyklen-Entwicklung des ultraschnellen Tunnelstroms direkt verfolgen (Fig. 5e, gestrichelt). Faszinierenderweise scheinen die Elektronen sogar bei Spannungen innerhalb der DC-WSe$_2$-Bandlücke in die Trilage einzutreten. In diesem Fall könnten feldinduzierte Bandverbiegung und Subzyklen-Verzerrung der atomaren Orbitale in der obersten WSe$_2$-Schicht - aufgrund von Ladungen, die während des gesamten THz-Impulses in der Trilage gefangen sind - zu dem Signal beitragen. Diese materialspezifischen Einblicke in den atomar lokalisierten AC-Fluss von Elektronen ohne *a priori* Annahmen über ultraschnelles Tunneln sind die größte Stärke von NOTE, die keiner anderen Technik zugänglich sind.

**Diskussion und Schlussfolgerungen**

Zusammengefasst haben wir einen völlig unvorhergesehenen quantenmechanischen Kontrastmechanismus für optische Nahfelder auf atomaren Längenskalen entdeckt: Wechselstrom-Tunnelströme, die von optischen Nahfeldern getrieben werden und über die Spitze kohärente elektromagnetische Wellen aussenden. Damit können wir zum ersten Mal die Subzyklen-Tunnelströme in einem auf Pikometer genau kontrollierten Tunnelkontakt direkt messen und bringen ultraschnelle optische Mikroskopie auf atomare Skalen. Im Gegensatz zu STM ist NOTE-Mikroskopie von Natur aus mit isolierenden Materialien kompatibel, da die Elektronen transient in die Probe und aus der Probe innerhalb eines einzigen THz-Impulses getunnelt werden, wobei im Wesentlichen kein gleichgerichteter Tunnelstrom zurückbleibt. Im Gegensatz zu Techniken, die auf Strommessungen basieren, tasten wir in der NOTE-Mikroskopie das emittierte Licht mit Hilfe der wohldefinierten optischen $\chi^{(2)}$ Nichtlinearität von EOS ab und entkoppeln damit das Detektionsverfahren von der inhärenten Probendynamik. Dies gewährt einen experimentellen Zugang zur Elektronen-Dynamik in einer Vielzahl von Quantenmaterialien und zukünftigen Quanteninformationsplattformen, bei denen langlebige Spin- und Quasiteilchenkohärenzen an Elektronen koppeln. Da elektro-optisches Abtasten im gesamten infraroten und sichtbaren Spektralbereich verfügbar ist, erwarten wir, dass NOTE in der Frequenz weit skalierbar und sogar bei Raumtemperatur möglich sein wird. Damit lässt sich die Leistungsfähigkeit rein optischer Subzyklen-Spektroskopie nun mit atomarer Auflösung kombinieren. Dies öffnet die Tür zu Starkfelddynamik, die bisher nur auf makroskopischen Längenskalen zugänglich war, wie z. B. zur Lichtwellenelektronik und Valleytronik, Quanten-Nanoplasmonik, Bandstruktur-Engineering von Quantenphasen, Erzeugung von hohen Harmonischen und vielen anderen aktuellen Aspekten der Attosekundenphysik.

**Patentansprüche**

1.    Mikroskopieverfahren, umfassend:

- optisches Anregen eines zeitlich variierenden Tunnelstroms zwischen einer Messspitze und einer Oberfläche einer zu untersuchenden Probe; und
- Detektieren einer durch den zeitlich variierenden Tunnelstrom emittierten elektromagnetischen Strahlung.

2.    Mikroskopieverfahren nach Anspruch 1, wobei das optische Anregen des zeitlich variierende Tunnelstroms umfasst:

- Anordnen der Messspitze in einem Messabstand zur Oberfläche der zu untersuchenden Probe; und
- Einstrahlen elektromagnetischer Anregungsstrahlung auf die Messspitze zur Erzeugung einer zeitlich variierenden Tunnelspannung zwischen der Messspitze und der Oberfläche der zu untersuchenden Probe.

3.    Mikroskopieverfahren nach Anspruch 2, wobei die zeitlich variierende Tunnelspannung mit einer Amplitude im Bereich von zumindest etwa 1 mV, vorzugsweise zumindest etwa 10 mV und/oder in einem Bereich von nicht mehr als etwa 5 V, vorzugsweise nicht mehr als etwa 1 V erzeugt wird.

4.    Mikroskopieverfahren nach Anspruch 2 oder 3, wobei der Messabstand in einem Bereich von nicht mehr als etwa 10 nm, vorzugsweise nicht mehr als etwa 5 nm, noch mehr bevorzugt nicht mehr als etwa 2 nm, weiter bevorzugt nicht mehr als etwa 1 nm liegt.

5.    Mikroskopieverfahren nach einem der vorangegangenen Ansprüche, umfassend:

- Anregen der Messspitze zu einer mechanischen Schwingung in zumindest einer Richtung im Wesentlichen senkrecht zur Oberfläche der zu untersuchenden Probe.

6.    Mikroskopieverfahren nach Anspruch 5,

- wobei die mechanische Schwingung eine Amplitude im Bereich von nicht mehr als etwa 5 nm, vorzugsweise nicht mehr als etwa 2 nm, noch mehr bevorzugt nicht mehr als etwa 1 nm, am meisten bevorzugt nicht mehr als etwa 0,5 nm aufweist.

7. Mikroskopieverfahren nach Anspruch 5 oder 6, umfassend:

  - Detektieren der Auslenkung der Messspitze mittels eines piezo-elektrischen Sensors.

8. Mikrosopieverfahren nach einem der vorangegangenen Ansprüche, wobei die Messspitze an einem schwingungsfähigen Resonanzfinger derart angeordnet ist, dass für eine Auslenkung der Messspitze eine Federkraft im Bereich von zumindest etwa 10 N/m, vorzugsweise zumindest etwa 100 N/m, noch mehr bevorzugt zumindest etwa 0,5 kN/m, am meisten bevorzugt zumindest etwa 1 kN/m bewirkt wird.

9. Mikroskopieverfahren nach einem der vorangegangenen Ansprüche, umfassend:

  - laterales Verschieben der zu untersuchenden Probe relativ zur Messspitze zur ortsaufgelösten Untersuchung der Probe.

10. Mikroskopievorrichtung, umfassend:

  - einen Probenhalter zur Aufnahme einer zu untersuchenden Probe;
  - eine Messspitze zur Untersuchung an einer Oberfläche der zu untersuchenden Probe;
  - eine optische Anregungseinrichtung zum optischen Anregen eines zeitlich variierenden Tunnelstroms zwischen der Messspitze und der Oberfläche der zu untersuchenden Probe; und
  - eine Detektionseinrichtung zum Detektieren einer durch den zeitlich variierenden Tunnelstrom emittierten elektromagnetischen Strahlung.

Fig. 1

Fig. 2

Fig. 3

Fig. 4

EP 4 621 416 A1

Fig. 5

EP 4 621 416 A1

Europäisches Patentamt
European Patent Office
Office européen des brevets

# EUROPÄISCHER RECHERCHENBERICHT

**Nummer der Anmeldung**

EP 25 16 3001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YANG BEN ET AL: "Sub-nanometre resolution in single-molecule photoluminescence imaging", NATURE PHOTONICS, NATURE PUBLISHING GROUP UK, LONDON, Bd. 14, Nr. 11, 10. August 2020 (2020-08-10), Seiten 693-699, XP037277874, ISSN: 1749-4885, DOI: 10.1038/S41566-020-0677-Y [gefunden am 2020-08-10] | 1-4,9,10 | INV. G01Q60/02 G01Q60/12 G01Q60/18 |
| Y | * Abbildung 1a * <br> * Absatz [Results] * | 5-8 | |
| Y | SCHELCHSHORN MICHAEL ET AL: "On the origin and elimination of cross coupling between tunneling current and excitation in scanning probe experiments that utilize the qPlus sensor", REVIEW OF SCIENTIFIC INSTRUMENTS, AMERICAN INSTITUTE OF PHYSICS, 2 HUNTINGTON QUADRANGLE, MELVILLE, NY 11747, Bd. 94, Nr. 11, 27. November 2023 (2023-11-27), XP012279776, ISSN: 0034-6748, DOI: 10.1063/5.0151615 [gefunden am 2023-11-27] * Abbildung 2 * * Absatz [III.A] * | 5-8 | RECHERCHIERTE SACHGEBIETE (IPC) <br><br> G01Q |

-/--

Der vorliegende Recherchenbericht wurde für alle Patentansprüche erstellt

| Recherchenort | Abschlußdatum der Recherche | Prüfer |
|---|---|---|
| Berlin | 14. Juli 2025 | Polesello, Paolo |

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

EP 25 16 3001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VOELCKER M ET AL: "LASER-ASSISTED SCANNING TUNNELING MICROSCOPY", JOURNAL OF VACUUM SCIENCE AND TECHNOLOGY: PART B, AVS / AIP, MELVILLE, NEW YORK, NY, US, Bd. 9, Nr. 2 PART 02, 1. März 1991 (1991-03-01), Seiten 541-544, XP000222875, ISSN: 1071-1023, DOI: 10.1116/1.585564 | 1-4,9,10 | |
| A | * Abbildung 1 * <br> * Absatz [000I] - Absatz [00II] * | 5-8 | |
| X | KATAYAMA IKUFUMI ET AL: "Investigation of ultrafast excited-state dynamics at the nanoscale with terahertz field-induced electron tunneling and photon emission", JOURNAL OF APPLIED PHYSICS, AMERICAN INSTITUTE OF PHYSICS, 2 HUNTINGTON QUADRANGLE, MELVILLE, NY 11747, Bd. 133, Nr. 11, 17. März 2023 (2023-03-17), XP012273247, ISSN: 0021-8979, DOI: 10.1063/5.0144218 [gefunden am 2023-03-17] | 1,2,4,9,10 | |
| A | * Abbildungen 1,2,4 * <br> * Absatz [Fundamentals] * <br> * Absätze [0THz] - [0STL] * | 3,5-8 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Berlin | 14. Juli 2025 | Polesello, Paolo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)